## Europäisches Patentamt
## European Patent Office
## Office européen des brevets

(19)

(11) Veröffentlichungsnummer : **0 443 576 B1**

(12)

# EUROPÄISCHE PATENTSCHRIFT

(45) Veröffentlichungstag der Patentschrift :
**04.05.94 Patentblatt 94/18**

(51) Int. Cl.$^5$ : **B25J 9/10, B25J 17/02**

(21) Anmeldenummer : **91102537.7**

(22) Anmeldetag : **21.02.91**

(54) **Antrieb mindestens zweier konzentrischer Wellen zum Bewegen einer Robotor-Abtriebseinrichtung.**

(30) Priorität : **23.02.90 DE 4005765**

(43) Veröffentlichungstag der Anmeldung :
**28.08.91 Patentblatt 91/35**

(45) Bekanntmachung des Hinweises auf die
Patenterteilung :
**04.05.94 Patentblatt 94/18**

(84) Benannte Vertragsstaaten :
**AT BE CH DE DK ES FR GB GR IT LI LU NL SE**

(56) Entgegenhaltungen :
**EP-A- 0 255 612**
**EP-A- 0 309 329**

(56) Entgegenhaltungen :
**SU-A- 763 082**
**US-A- 3 784 031**
**US-A- 3 922 930**
**US-A- 3 971 266**

(73) Patentinhaber : **Kerpe, Stefan**
**Graf-Eberhard-Strasse 46/1**
**D-71296 Heimsheim (DE)**

(72) Erfinder : **Kerpe, Stefan**
**Graf-Eberhard-Strasse 46/1**
**D-71296 Heimsheim (DE)**

(74) Vertreter : **Gleiss, Alf-Olav, Dipl.-Ing. et al**
**Gleiss & Grosse Patentanwaltskanzlei**
**Maybachstrasse 6A**
**D-70469 Stuttgart (DE)**

EP 0 443 576 B1

Jouve, 18, rue Saint-Denis, 75001 PARIS

**Beschreibung**

Die Erfindung betrifft einen Antrieb gemäß Oberbegriff des Anspruchs 1 bzw. 2.

Eine Abtriebseinrichtung der hier angesprochenen Art ist bei Robotern bekannt und dient der Befestigung von Vorrichtungen zur Erfüllung robotertypischer Aufgaben wie z.B. Greifen von Werkstücken, Schweißen, Aufbringen von Beschichtungen wie beispielsweise Klebstoff; sie kann aber auch mit einem Mechanismus zum Bewegen einer zweiten Abtriebseinrichtung verbunden sein, welche ihrerseits die oben genannten Vorrichtungen aufnimmt. Die Abtriebseinrichtung mitsamt den daran befestigten Bauteilen wird vom Roboter durch Bewegung seiner konstruktiv vorgegebenen translatorischen und/oder rotatorischen Achsen in vorgegebene Stellungen im Arbeitsraum verfahren. Hierbei können entweder einprogrammierte Stellungen angefahren oder aber vorgegebene Bahnen abgefahren werden. Im folgenden werde der Aufbau zum Bewegen der Abtriebseinrichtung als Roboter-Greifarm bezeichnet.

Roboter-Greifarme der hier angesprochenen Art sind beispielsweise bei Portalrobotern bekannt, können jedoch auch als Bauteil einer anderen Roboterbauart angewendet werden. Bei Portalrobotern wird ein von einer im wesentlichen vertikal verlaufenden Halterung getragener Greifarm von geeigneten Antriebseinrichtungen in senkrecht zueinander verlaufenden Richtungen, beispielsweise in Richtung einer x-Achse und einer y-Achse, bewegt. Zusätzlich ist eine Bewegung des Greifarms senkrecht zu der von der x- bzw. y-Achse gebildeten Ebene in Richtung einer z-Achse möglich. Überdies ist vorgesehen, daß Teile des Greifarms, beispielsweise ein Greifer, um eine in der genannten Ebene liegende Achse, die senkrecht auf der z-Achse steht, drehbar ist. Diese Achse wird als A-Achse definiert. Zusätzlich kann eine Drehbewegung des Greifarms um die z-Achse erfolgen, wobei diese Achse auch als C-Achse definiert wird.

Eine Verdrehung des Greifarms um die C-Achse erfolgt mittels einer den Greifarm tragenden Hohlwelle. In deren Inneren ist eine konzentrisch verlaufende Welle vorgesehen, die eine Rotation des Greifers um die A-Achse ermöglicht. Zusätzlich kann im Inneren der der A-Achse zugeordneten, hohl ausgeführten Welle noch eine weitere der Betätigung eines am Greifarm befestigten Mechanismus dienende konzentrische Welle vorgesehen werden. Durch eine Drehbewegung dieser Welle wird z.B. ein öffnen und Schließen eines Greifers oder die Betätigung einer weiteren Roboter-Achse bewirkt. Da sich die Drehbewegungen der einzelnen Wellen, insbesondere bei Verwendung von Kegelzahnrädern auf der Abtriebsseite der Wellen, gegenseitig beeinflussen, sind Drehungen um die A-Achse bzw. die C-Achse sowie das unabhängige Öffnen und Schließen des Greifers nur durch aufwendige Steuerungen, insbesondere durch NC-Steuerungen und Servomotoren realisierbar. Dies ist nicht nur eine technisch sehr aufwendige sondern auch kostenintensive Lösung.

Aus der DE-OS 36 05 616 ist ein Antrieb bekannt, bei dem der A-Achse ein Ritzel zugeordnet ist, welches von einer Zahnstange bewegt wird. Diese dreht sich mit der C-Achse und muß relativ zu dem in der z-Achse liegenden Haltearm beweglich sein. Nachteilig ist, daß das Ritzel klein sein muß, um den Hub der Zahnstange in Grenzen zu halten, so daß der Antrieb relativ viel Spiel aufweist. Die A-Achse schneidet jedoch bei dieser Lösung nicht die C-Achse, sie liegt vielmehr gegenüber dieser etwas versetzt, so daß lediglich eine begrenzte Bewegung des Ritzels möglich ist. Überdies ist dieser Antrieb sehr raumintensiv.

Aus der deutschen Offenlegungsschrift DE-OS 35 04 233 ist ein Antrieb für einen mehrere konzentrische Wellen aufweisenden Roboter-Greifarm bekannt, der einen einzigen Motor und elektromagnetische Kupplungen für jede Hohlwelle umfaßt. Durch eine Kopplung der der C-Achse und der der A-Achse zugeordneten Hohlwellen kann bei einer gewünschten ausschließlichen Bewegung um die C-Achse eine Relativbewegung der beiden Achsen zueinander vermieden werden. Nachteil ist jedoch, daß bei einer Drehung um die C-Achse eine zusätzliche Rotation um die A-Achse nicht möglich ist. Das heißt, während einer Drehung um die C-Achse ist eine Betätigung eines mit der A-Achse zusammenwirkenden Greifers ausgeschlossen.

Es ist daher Aufgabe der Erfindung, einen Antrieb für einen Roboter-Greifarm zu schaffen, der möglichst einfach und raumsparend aufgebaut sowie extrem spielarm ist, wobei eine separate Bewegung der Wellen möglich ist.

Diese Aufgabe wird bei einem Antrieb der eingangs genannten Art mit Hilfe der in Anspruch 1 bzw. 2 aufgeführten Merkmale gelöst. Danach ist mindestens ein umlaufendes Untersetzungsgetriebe vorgesehen, dessen Gehäuse und dessen Abtrieb mit je einem Zahnrad versehen sind. Diese bewegen die vorgesehenen Zahnräder der Wellen für die C- und A-Achse des Roboter-Greifarms. Die Zahnräder am Gehäuse und Abtrieb des Umlaufgetriebes weisen bei feststehendem Antrieb unterschiedliche Umdrehungsgeschwindigkeiten auf. Zu deren Kompensation ist eine Zähnezahldifferenz vorgesehen, das heißt, die Zahnräder sind mit voneinander abweichenden Zähnezahlen ausgestattet, damit auch mit verschiedenen Durchmessern. Der Antrieb ist so ausgelegt, daß die Zahnräder sowohl der Wellen des Roboter-Greifarms als auch die Zahnräder des Getriebes jeweils auf konzentrischen Achsen angeordnet sein können.

Durch diesen Aufbau wird eine optimale Entkopplung der Wellen erreicht, das heißt, beide Wellen können unabhängig voneinander gedreht werden, wobei andererseits die Rotation der einen Welle die Bewegung der anderen nicht beeinflußt.

Dadurch, daß für die Entkopplung zweier Wellen lediglich ein Umlaufgetriebe vorgesehen ist, ergibt sich ein besonders raumsparender Antrieb. Er ist überdies extrem spielarm. Außerdem liegt hier eine besonders kostengünstige Lösung vor, da das Umlaufgetriebe gleichzeitig als Untersetzungsgetriebe dienen kann. Als weitere Vorteile sind die Verwendbarkeit unterschiedlicher Motorentypen zum Antreiben der einzelnen Roboter-Achsen, sowie die Einsetzbarkeit unaufwendiger, unentkoppelter Steuerungen zu nennen.

Besonders bevorzugt wird ein Ausführungsbeispiel des Antriebs mit Evolventenverzahnung, bei dem der Ausgleich der Zähnezahl durch eine Profilverschiebung und/oder die Verwendung unterschiedlichen Moduls (Zahngröße) der Zahnradpaare erfolgt. Auf diese Weise ist es besonders einfach, von einer Zähnezahldifferenz verursachte unterschiedliche Achsabstände von Zahnradpaaren auszugleichen.

Weitere Vorteile und Ausgestaltungen ergeben sich aus den übrigen Unteransprüchen. Besonders vorteilhaft ist es, daß es für den hier vorgeschlagenen Antrieb irrelevant ist, ob die konzentrischen Wellen oder das Umlaufgetriebe mit Zahnrädern gleichen Durchmessers bzw. mit gleicher Zähnezahl ausgestattet ist und die jeweils anderen Zahnräder durch einen Zahnausgleich angepaßt werden. Dadurch, daß die Zahnräder der Wellen beispielsweise lediglich einen gleichen Durchmesser und eine übereinstimmende Zähnezahl aufweisen müssen, kann der Antrieb sehr flexibel auch bei bestehenden Antrieben für Roboter-Greifarme eingesetzt werden.

Die Erfindung wird im folgenden anhand der Zeichnungen näher erläutert. Es zeigen:

Figur 1 den prinzipiellen Aufbau eines Antriebs für einen Roboter-Greifarm;

Figur 2 ein erstes Ausführungsbeispiel eines Entkopplungsgetriebes;

Figur 3 ein zweites Ausführungsbeispiel eines Entkopplungsgetriebes;

Figur 4 eine Prinzipskizze der Entkopplung von vier konzentrischen Wellen;

Figur 5 ein drittes Ausführungsbeispiel eines Entkopplungsgetriebes für einen mit einem beweglichen Greifer ausgestatteten Roboter-Greifarm.

Figur 6 ein viertes Ausführungsbeispiel eines Entkopplungsgetriebes für einen mit einer zusätzlichen Achse ausgestatteten Roboter-Greifarm.

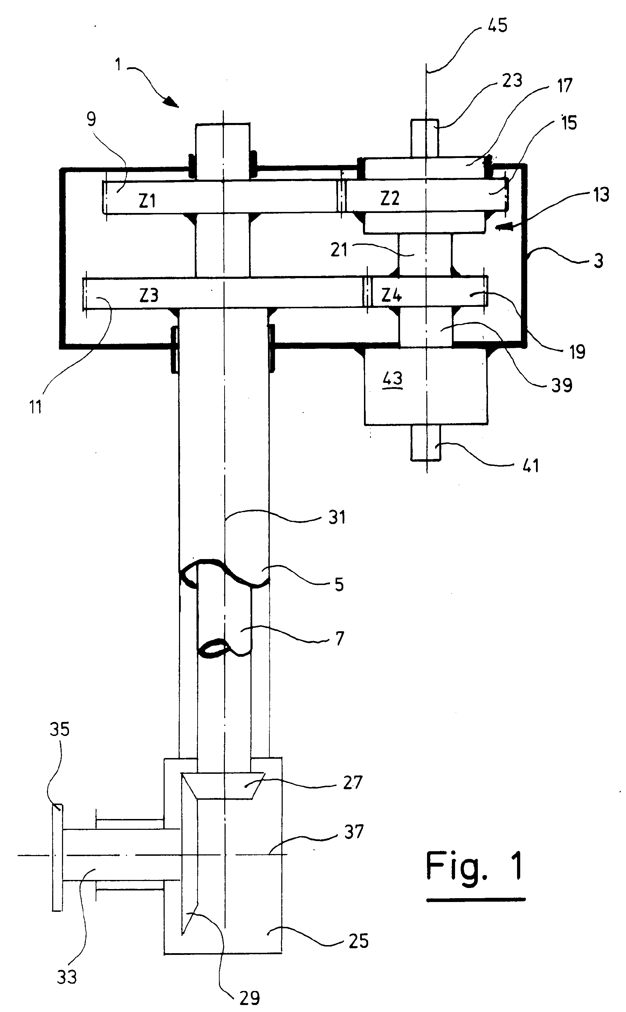

Figur 1 zeigt einen Antrieb für einen Roboter-Greifarm. Es sind lediglich die hier in Frage kommenden wesentlichen Teile dargestellt.

Der Antrieb 1 weist einen Getriebekasten 3 auf, der die oberen Enden zweier konzentrischer Wellen 5 und 7 einschließt. Bei dieser Darstellung sind beide Wellen als Hohlwellen ausgebildet. Es ist jedoch auch denkbar, daß die innere Welle 7 massiv ausgebildet ist.

An den oberen Enden der konzentrischen Wellen 5 und 7 ist jeweils ein Zahnrad auf geeignete Weise drehfest angebracht. Die erste konzentrische Welle 7 wird im folgenden auch erste Welle, die zweite konzentrische Welle 5 auch zweite Welle genannt. Dabei ist an dem oberen Ende der ersten Welle 7 ein Zahnrad 9, welches im folgenden auch erstes Zahnrad genannt wird, und an dem oberen Ende der zweiten Welle 5 ein Zahnrad 11, welches im folgenden auch zweites Zahnrad genannt wird, befestigt. Mit diesen Zahnrädern kämmen zwei weitere Zahnräder, die an einem umlaufenden Untersetzungsgetriebe, auch als Umlaufgetriebe bezeichneten Getriebe 13 befestigt sind. Das Zahnrad 15, im folgenden auch drittes Zahnrad genannt, ist auf der Außenseite des Gehäuses 17 des Umlaufgetriebes 13 drehfest angeordnet. Das Zahnrad 19, im folgenden auch viertes Zahnrad genannt, ist mit der Abtriebswelle 21 des Umlaufgetriebes 13 fest verbunden. Als zweite Welle des Umlaufgetriebes 13 tritt aus dessen Gehäuse 17 eine Antriebswelle 23, die bei dem hier dargestellten Ausführungsbeispiel oben aus dem Getriebekasten 3 austritt, und auch als A-Antrieb bezeichnet wird.

Aus der Darstellung ist ersichtlich, daß das Zahnrad 9 auf der ersten Welle 7 mit dem auf dem Gehäuse 17 befestigten Zahnrad 15 des Umlaufgetriebes 13 kämmt. Das am oberen Ende der zweiten Welle 5 angebrachte Zahnrad 11 kämmt mit dem auf der Abtriebswelle 21 des Umlaufgetriebes 13 befestigten Zahnrad 19. Durch diese Anordnung ist das Umlaufgetriebe 13 mitsamt den daran befestigten Zahnrädern 15 und 19 nicht konzentrisch mit den konzentrischen Wellen 5 und 7, so daß beispielsweise Versorgungsleitungen durch die als Hohlwellen ausgebildeten konzentrischen Wellen geführt werden können.

Es ist auch möglich, zwischen mindestens einem der beiden Zahnradpaare 15,9 und 19,11, welche aus dem dritten und dem ersten Zahnrad, sowie dem vierten und dem zweiten Zahnrad gebildet werden, weitere bewegungsübertragende Maschinenelemente wie etwa Zahnräder und Wellen anzuordnen, um die anzutreibenden konzentrischen Wellen 5 und 7 entfernt vom Umlaufgetriebe 13 betreiben zu können. In diesem Fall müssen die mit den Zahnrädern 15 und 19 des Umlaufgetriebes 13 kämmenden Zwischenzahnräder nicht miteinander konzentrisch sein. Um die unten näher erläuterten Entkopplungsbedingungen einzuhalten, dürfen die zwischengeschalteten Maschinenelemente Drehgeschwindigkeit und Drehrichtung der an den konzentrischen Wellen (5,7) befestigten Zahnräder 9 bzw. 11 nur in gleichem Maße beeinflussen. Bei Figur 1 ist das untere Ende des Roboter-Greifarms lediglich angedeutet. Es ist hier ein unteres Gehäuse 25 vorgesehen, das an der zweiten Welle 5 angebracht ist. In das Innere dieses Gehäuses ragt die erste Welle 7. Sie ist mit einem

3

ersten Kegelrad 27 versehen, welches mit einem zweiten Kegelrad 29 kämmt. Das zweite Kegelrad 29 ist seinerseits an einer im allgemeinen senkrecht zur Mittelachse 31 der konzentrischen Wellen 5 und 7 verlaufenden Flanschwelle 33, die hier als Hohlwelle ausgebildet ist, befestigt. An dem, dem zweiten Kegelrad 29 gegenüberliegenden Ende der Flanschwelle 33, ist ein Flansch 35 vorgesehen, an dem beispielsweise ein hier nicht dargestellter Greifer zur Handhabung von Werkstücken angebracht werden kann.

Der hier gezeigte Roboter-Greifarm mit seinem zugehörigen Antrieb kann Teil eines Portalroboters sein, das heißt, der Roboter-Greifarm kann über geeignete Antriebe über einer Fläche in x- und y-Richtung bewegt werden. Darüber hinaus ist eine senkrecht zu dieser Ebene verlaufende Verschiebung des Roboter-Greifarms, also in Richtung einer z-Achse, denkbar. Die in Richtung dieser z-Achse verlaufende Mittelachse 31 wird auch als C-Achse, die Mittelachse 37 der Flanschwelle 33 als A-Achse bezeichnet.

Die Abtriebswelle 21 des Umlaufgetriebes 13 kann sich in einer zweiten Antriebswelle 39 fortsetzen, die ihrerseits in eine Antriebswelle 41 übergehen kann. Die Antriebswelle 41 wird auch als C-Antrieb bezeichnet, da an dieser Welle angreifende Drehmomente zu einer Verdrehung der zweiten Antriebswelle 39, des vierten Zahnrads 19 sowie des Zahnrads 11 am oberen Ende der zweiten Welle 5 führen. Damit wird also eine Verdrehung des Roboter-Greifarms um die C-Achse hervorgerufen.

Es ist gemäß Figur 1 auch möglich, zwischen dem C-Antrieb 41 und der zweiten Abtriebswelle 39 ein zusätzliches Getriebe 43 vorzusehen.

Eine Mittelachse 45 verläuft konzentrisch zum Umlaufgetriebe 13, dessen Antriebswelle 23, Gehäuse 17, Abtriebswelle 21 und zu der zweiten Antriebswelle 39.

Die Antriebswelle 23 des Umlaufgetriebes 13 wird auch als A-Antrieb bezeichnet, weil eine Drehung dieser Welle zu einer Drehung des Gehäuses 17 mit dem dritten Zahnrad 15, des ersten Zahnrads 9, der mit diesem zusammenhängenden ersten Welle 7 und schließlich der Flanschwelle 33 um die Mittelachse 37 bzw. um die A-Achse führt.

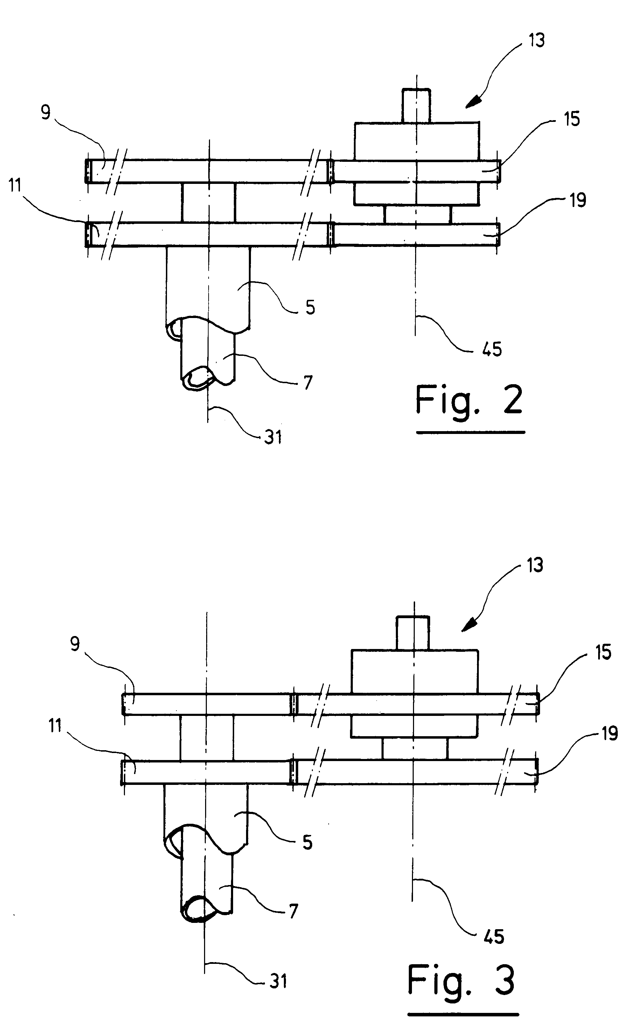

In den Figuren 2 und 3 sind, lediglich skizziert, die oberen Enden der konzentrischen Wellen 5 und 7 mit den zugehörigen Zahnrädern 11 und 9 sowie das Umlaufgetriebe 13 mit den entsprechenden Zahnrädern 19 und 15 dargestellt. Das Gehäuse für den Antrieb sowie das untere Ende der Hohlwellen sind aus Gründen der besseren Übersichtlichkeit hier nicht noch einmal dargestellt. Gleiche Teile sind mit gleichen Bezugszeichen versehen.

Bei dem Ausführungsbeispiel gemäß Figur 2 kann die Zähnezahl der an den oberen Enden der konzentrischen Wellen 5 und 7 befestigten Zahnräder 11 und 9 frei gewählt werden. Die Zähnezahl muß jedoch für beide Zahnräder gleich sein, wodurch -wie gezeigt- die Entkopplung zweier rotatorischer Achsen ermöglicht wird. Die Zähnezahl der am Umlaufgetriebe 13 befestigten Zahnräder 15 und 19 bestimmt sich nach dessen Funktionsweise, also danach, ob es sich um ein gleich- oder gegenläufiges Getriebe handelt. Darauf wird unten noch genauer eingegangen.

Bei einer Ausführung entsprechend Figur 2 können anstelle mindestens eines der gleich großen ersten und zweiten Zahnräder 9 und 11 auch Bauteile zur Übertragung linearer Bewegungen von Roboter-Achsen mit den dritten und vierten Zahnrädern 15 und 19 zusammenwirken. Die Entkopplung einer linearen von einer anderen linearen Bewegung wird möglich, indem die ersten und zweiten Zahnräder 9 und 11 mit unendlich großem Durchmesser ausgeführt werden und in Folge dessen gerade Bauteile wie beispielsweise Zahnstangen ergeben; diese wiederum werden von den Zahnrädern 15, 19 des Umlaufgetriebes mit definierten linearen Geschwindigkeiten -beispielsweise gleichschnell- bewegt, wodurch sich ein Entkopplungseffekt einstellt. Zur Erzielung eines definierten Geschwindigkeitsverhältnisses zwischen den nunmehr als Zahnstangen ausgeführten Zahnrädern 9 und 11, und somit die Anpassung des Antriebes an die konstruktiven Gegebenheiten, kann die Zähnezahl mindestens eines der Zahnräder 15 und 19 des Umlaufgetriebes 13 mit einem beliebigen Faktor multipliziert werden, wobei die Einhaltung ganzzahliger Zähnezahlen zu beachten ist. Auf diese Weise ist auch die Entkopplung einer rotatorischen von einer translatorischen, bzw. einer translatorischen von einer rotatorischen Roboter-Achse möglich, wobei hierzu lediglich eines der ersten und zweiten Zahnräder 9 oder 11 durch entsprechende Bauteile zur Übertragung der linearen Bewegungen einer Roboter-Achse ersetzt wird.

Bei dem Ausführungsbeispiel gemäß Figur 3 kann die Zähnezahl der Zahnräder 15 und 19 des Umlaufgetriebes 13 frei gewählt werden. Die Zähnezahl muß allerdings auch hier für beide Zahnräder gleich sein. Die Zähnezahl der Zahnräder 9 und 11 an den oberen Enden der konzentrischen Wellen 7 und 5 bestimmt sich dagegen ebenfalls nach der Funktionsweise (gleich- oder gegenläufig) des Umlaufgetriebes 13.

Aus den Figuren 2 und 3 ist -ebenso wie aus Figur 1- ersichtlich, daß die Mittelachse 31 der konzentrischen Wellen 5 und 7 parallel verläuft zu der Mittelachse 45 des Umlaufgetriebes 13. Diese Mittelachsen 31 und 45 können ohne Verwendung weiterer bewegungsübertragender Maschinenbauteile zwischen den Zahnradpaaren 9,15 und 11,19, welche aus dem ersten und dritten sowie dem zweiten und vierten Zahnrad gebildet werden, nicht konzentrisch sein.

Nun zur Funktion des in den Figuren 1 bis 3 dargestellten Antriebs:

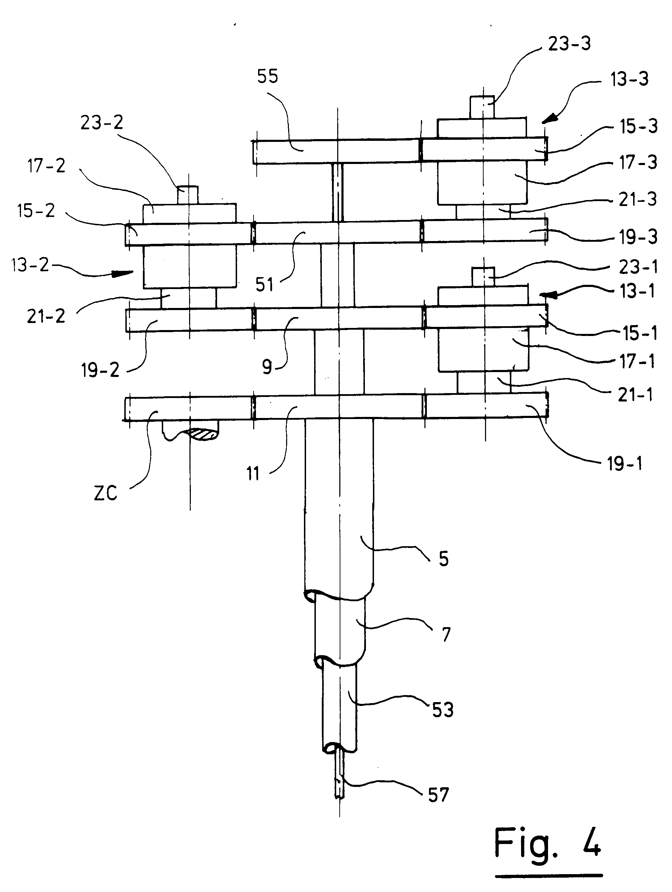

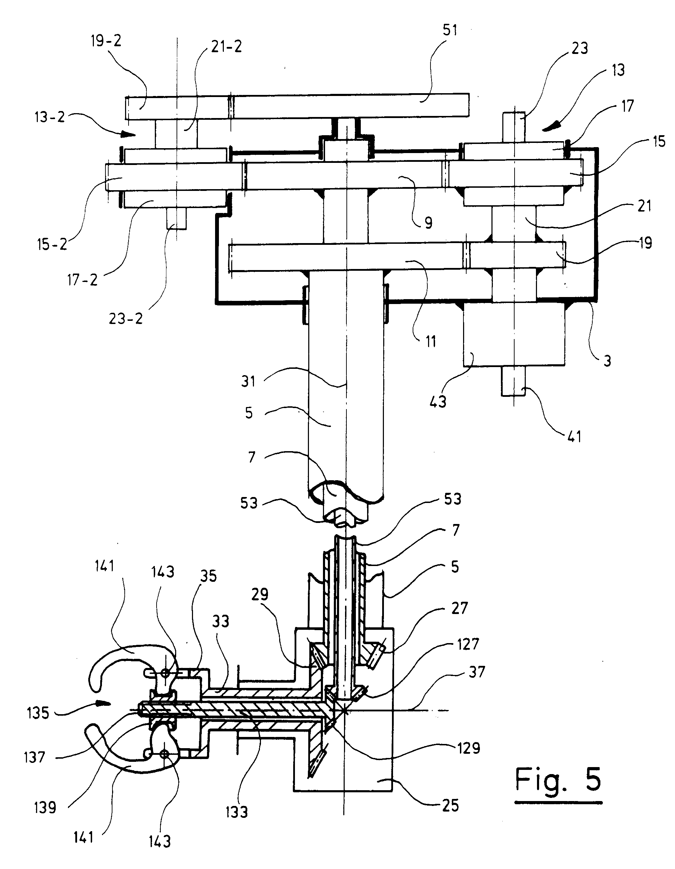

Der Roboter-Greifarm weist ein einen Antrieb aufnehmenden Getriebekasten 3 an der Oberseite zweier konzentrischer Wellen 5 und 7 auf. Am unteren Ende der Wellen ist ein unteres Gehäuse 25 vorgesehen, aus dem eine Flanschwelle 33 mit einem geeigneten Flansch 35 ragt. Ein an diesem Flansch befestigter Greifer oder Werkzeug kann auf geeignete Weise angetrieben werden. Einerseits sind elektrische, hydraulische oder pneumatische Antriebe möglich, da durch die hohl ausgebildete erste Welle 7 die Zuführung von Installationsleitungen gewährleistet ist. Es ist aber auch möglich, eine weitere ebenfalls zu entkoppelnde Welle durch die innere erste Welle 7 zu führen, die dann dem Antrieb des Greifers oder Werkzeuges dient. Eine derartige Möglichkeit ergibt sich aus den Figuren 4 und 5, auf die unten noch genauer eingegangen wird.

Bei einer Rotation der äußeren zweiten Welle 5 dreht sich das untere Gehäuse 25 um die Mittelachse 31 bzw. die C-Achse. Dabei bewegt sich der Flansch 35 auf einer Kreisbahn und mit ihm beispielsweise ein Greifer. Dieser kann also an einem beliebigen Punkt p aufgenommene Elemente nach einer Rotation um die C-Achse an einer Stelle p' absetzen, beispielsweise im Zuge einer automatischen Fertigungsstrecke.

Auch ist es möglich, mit einem Greifer aufgenommene Teile nach einer Rotation um die C-Achse einer Bearbeitungseinheit zuzuführen, wobei auch eine gleichzeitige Rotation der Teile um die Mittelachse 37, bzw. die A-Achse möglich ist.

Eine Rotation um die C-Achse erfolgt durch ein auf den C-Antrieb 41 wirkendes Drehmoment. Dieses führt zu einer Verdrehung des vierten Zahnrads 19 und des damit kämmenden zweiten Zahnrads 11 am oberen Ende der äußeren zweiten Welle 5. Wenn eine Rotation der Flanschwelle 33 und damit des Flanschs 35 um die A-Achse 37 gewünscht ist, wird ein Drehmoment auf den A-Antrieb 23 ausgeübt, durch welches eine Verdrehung des dritten Zahnrads 15 des Umlaufgetriebes 13 und des mit diesen Zahnrad kämmenden Zahnrads 9 am Oberende der inneren ersten Welle 7 erfolgt. Durch eine Drehbewegung des mit der inneren Welle verbundenen ersten Kegelrads 27 wird auch eine Drehung des zweiten Kegelrads 29 und damit der Flanschwelle 33 um die A-Achse erzwungen.

Wenn lediglich eine Verdrehung des unteren Gehäuses 25 um die C-Achse gewünscht ist, ohne daß dabei eine Rotation des Flansches 35 um die Mittelachse 37 erfolgen soll, so ist es erforderlich, daß sich die beiden konzentrischen Wellen 5 und 7 mit gleicher Umdrehungsgeschwindigkeit drehen. Damit ist dann auch eine sogenannte Entkopplung der Wellen erreicht.

Das in den Figuren 1 bis 3 dargestellte Umlaufgetriebe 13 zeichnet sich dadurch aus, daß bei relativ zum Getriebekasten 3 stehender Antriebswelle 23 und sich drehendem Gehäuse 17 eine vorbestimmte Drehzahldifferenz zwischen der Abtriebswelle 21 mit Zahnrad 19 und dem Gehäuse 17 mit dem Zahnrad 15 gegeben ist.

Bei dieser Betrachtung müssen zwei Grundtypen von den als Umlaufgetriebe verwendeten Getriebe unterschieden werden, nämlich gleichläufige und gegenläufige Getriebe. Bei gleichläufigen Getrieben dreht sich bei festgehaltenem Gehäuse der Abtrieb in Drehrichtung des Antriebs. Bei gegenläufigen Getrieben dreht sich der Abtrieb bei gleichen Gegebenheiten gegen die Umlaufrichtung des Antriebs. Als Untersetzung i wird das Drehzahlverhältnis zwischen Antrieb und Abtrieb bezeichnet, wobei i immer positiv ist. Getriebe mit gleichsinniger Drehung sind beispielsweise einstufige Planetenradgetriebe, bei dem der Planetenträger als Abtrieb dient. Gegenläufige Getriebe sind beispielsweise Cyclo-oder Harmonic Drive-Getriebe sowie einstufige Planetenradgetriebe, bei denen das Hohlrad als Abtrieb dient.

Bei dem hier vorliegenden Ausführungsbeispiel gilt grundsätzlich, daß sich die Drehzahl des Abtriebs bei festgehaltenem Antrieb von der des Gehäuses unterscheidet. Dabei ist davon auszugehen, daß die Drehzahl des Gehäuses 17 und damit des zugehörigen Zahnrads 15 bei einem gleichläufigen Getriebe gleichsinnig und größer ist als bei dem Zahnrad 19 auf der Abtriebswelle 21. Umgekehrt dreht sich bei einem gegenläufigen Getriebe das Gehäuse 17 mit dem zugehörigen Zahnrad 15 gleichsinnig und langsamer im Vergleich zu Zahnrad 19 auf der Abtriebswelle 21.

Diese unterschiedlichen Umdrehungsgeschwindigkeiten der Zahnräder des Umlaufgetriebes müssen ausgeglichen werden, um die oben erwähnte Entkopplung der C- beziehungsweise A-Achsen zugeordneten konzentrischen Wellen 5 und 7 zu erreichen.

Für die Umdrehungen der Zahnräder 15 und 19 des Umlaufgetriebes 13 ergibt sich folgendes:

Bei stehendem C-Antrieb 41 und bei angetriebenem A-Antrieb an der Antriebswelle 23 wird nur das Gehäuse 17 des Umlaufgetriebes und das zugehörige dritte Zahnrad 15 gedreht, welches mit dem ersten Zahnrad 9 der ersten Welle 7 verbunden ist. Damit findet lediglich eine Rotation der Flanschwelle 33 bei feststehender zweiter Welle 5 statt.

Wenn jedoch die Antriebswelle 23, der A-Antrieb, bezüglich Getriebekasten 3 festgehalten und die Antriebswelle 41, der C-Antrieb, angetrieben wird, darf sich der Flansch 35 der Flanschwelle 33 nicht drehen. Hierzu müssen die Zahnräder 9 und 11 an den oberen Enden der konzentrischen Wellen 5 und 7 mit gleicher Geschwindigkeit gedreht werden, damit sich das erste Kegelrad 27 nicht auf dem zweiten Kegelrad 29 abwälzen kann. Dies sind die oben schon erwähnten Bedingungen für eine Entkopplung.

Wenn sich das hier als Stirnrad ausgebildete dritte Zahnrad 15, also das Gehäuse 17 des Umlaufgetriebes 13 bei relativ zum Getriebekasten 3 stehender Antriebswelle 23 um i ganze Umdrehungen gedreht hat, bewegt sich bei einem gleichläufigen Getriebe dessen viertes Zahnrad 19 der Abtriebswelle 21 um (i - 1) ganze Umdrehungen, wobei mit i die Übersetzung des Umlaufgetriebes bezeichnet wird. Zum Ausgleich der unterschiedlichen Umdrehungsgeschwindigkeiten von Zahnrad 15 und 19 eines gleichläufigen Getriebes trägt entsprechend Figur 2 das dritte Zahnrad 15 x∗(i - 1) Zähne, das vierte Zahnrad 19 x∗i Zähne und das erste und zweite Zahnrad 9 und 11 dieselbe Anzahl Zähne; entsprechend Figur 3 ist es auch möglich, das dritte und vierte Zahnrad 15 und 19 mit derselben Anzahl Zähne, das erste Zahnrad 9 mit x∗i und das zweite Zahnrad 11 mit x∗(i-1) Zähnen zu versehen. Hierbei ist x ein beliebiger Faktor. Es ergibt sich folglich eine Zähnezahldifferenz z = x.

Unter gleichen Gegebenheiten dreht sich bei einem gegenläufigen Getriebe das an der Abtriebswelle 21 befestigte vierte Zahnrad 19 um (i + 1) ganze Umdrehungen. Dessen Umdrehungszahl ist hier also größer. Zum Ausgleich der unterschiedlichen Umdrehungsgeschwindigkeiten von Zahnrad 15 und 19 eines gegenläufigen Getriebes trägt entsprechend Figur 2 das dritte Zahnrad 15 x∗(i + 1) Zähne, das vierte Zahnrad 19 x∗i Zähne und das erste und zweite Zahnrad 9 und 11 dieselbe Anzahl Zähne; entsprechend Figur 3 ist es auch möglich, das dritte und vierte Zahnrad 15 und 19 mit derselben Anzahl Zähne, das erste Zahnrad 9 mit x∗i und das zweite Zahnrad 11 mit x∗(i+1) Zähnen zu versehen. Auch hierbei ist x ein beliebiger Faktor. Folglich ergibt sich auch hier eine Zähnezahldifferenz z = x.

Die im folgenden genannten Zähnezahlen Z1, Z2, Z3 und Z4 sind in erster Linie theoretische Zähnezahlen, das heißt, sie müssen zunächst nicht ganzzahlig sein. Die Zähnezahlen jedes Zahnradpaares Z1,Z2 und Z3,Z4 müssen in diesem Fall mit einem beliebigen positiven Faktor multipliziert werden, um ganzzahlige Zähnezahlen zu erhalten. Ferner kann mit diesen Faktoren der Achsabstand jedes Radpaares gezielt angepaßt werden. Es ist möglich, verscheiden große, beliebige positive Faktoren für jedes Radpaar zu verwenden, da eine gleichmäßige Änderung beider Zahnräder eines Zahnradpaares zwar dessen Achsabstand ändert, aber keinen Einfluß auf dessen Übersetzung hat.

Als Z2 wird die Zähnezahl des dritten Zahnrades 15 am Gehäuse 17 des Umlaufgetriebes 13 bezeichnet, als Z1 die Zähnezahl des mit Z2 zusammenwirkenden ersten Zahnrades 9, als Z4 die Zähnezahl des vierten Zahnrads 19 der Abtriebswelle 21 des Umlaufgetriebes 13 und als Z3 die Zähnezahl des mit Z4 zusammenwirkenden zweiten Zahnrads 11.

Z1, Z2, Z3 und Z4 sind gleichzeitig die allgemeine Benennung der ZahnRäder mit Z1, Z2, Z3 beziehungsweise Z4 Zähnen.

Als Entkopplungsfaktor E wird das Drehzahlverhältnis zwischen den Zahnrädern Z1 und Z3 bezeichnet, welches bei stehendem Antrieb und angetriebenem Gehäuse des Umlaufgetriebes vorliegt.

$$E = \frac{(\text{Drehzahl von Zahnrad Z1})}{(\text{Drehzahl von Zahnrad Z3})}$$

Werden anstelle der Zahnräder Z1 und Z3 Bauteile zur Übertragung einer linearen Bewegung wie z.B. Zahnstangen verwendet, sind anstelle der Drehzahlen die entsprechenden linearen Geschwindigkeiten einzusetzen.

Ist E = 1, so bewegen sich die Zahnräder, bzw. Zahnstangen, Z1 und Z3 gleichschnell.

Für ein gegenläufiges Umlaufgetriebe ergibt sich folgende Gleichung (1):

$$E = \frac{(Z2 \ast i) / Z1}{Z4 \ast (i + 1) / Z3} \quad (1)$$

Für gleichläufige Umlaufgetriebe ergibt sich dagegen die folgende Gleichung (2) für den Entkopplungsfaktor E:

$$E = \frac{(Z2 \ast i) / Z1}{Z4 \ast (i - 1) / Z3} \quad (2)$$

Anhand der Gleichungen (1) und (2) können die für die Entkopplung notwendigen Zähnezahlen ermittelt werden.

Zur Realisierung der Entkopplung werde bei der Realisierung eines Ausführungsbeispiels des Antriebs davon ausgegangen, daß die Zahnräder der konzentrischen Wellen 5 und 7 gleiche Zähnezahl und damit auch einen gleichen Durchmesser aufweisen. Bei einer Kopplung dieser Zahnräder mit den Zahnrädern des Umlaufgetriebes stellt sich heraus, daß eine parallele Anordnung der Mittelachsen 31 und 45 wegen der verschiedenen Durchmesser der Zahnräder des Umlaufgetriebes zunächst nicht möglich ist. Es bedarf also zum Ausgleich der verschiedenen Achsabstände der Zahnradpaare eines Zahnausgleichs.

Ein derartiger Zahnausgleich kann bei Verwendung von Evolventenverzahnung durch eine geeignete Profilverschiebung und/oder die Wahl des Moduls der zusammenwirkenden Zahnradpaare ausgeglichen werden, so daß gleicher Achsabstand der beiden Zahnradpaare gewährleistet ist.

Auch ist es möglich, zur Bewegungsübertragung zwischen den Zahnrädern der Wellen und den Zahnrädern des Umlaufgetriebes Ketten oder Zahnriemen zu verwenden, wobei auftretende Umfangsdifferenzen durch geeignete Riemenlängen und/oder zusätzlicher Verwendung von Spannvorrichtungen wie beispielsweise Spannrollen ausgleichen werden.

Ein Ausgleich der Zähnezahldifferenz z, bzw. des zunächst vorhandenen unterschiedlichen Achsabstandes der Zahnradpaare kann bei Verwendung von Evolventenverzahnung durch Anwendung von positiver und/oder negativer Profilverschiebung an den Zahnrädern erfolgen, wobei sich die drei folgenden Möglichkeiten ergeben:

Erstens kann mindestens eines der Räder des Radpaares mit der kleineren Zähnezahlsumme mit einer positiven Profilverschiebung ausgeführt werden, um die Mittelachsen der Räder dieses Radpaars mit einem größeren Abstand zu versehen. Zweitens kann statt dessen mindestens eines der Räder des Radpaares mit der kleineren Zähnezahl-Summe mit einer negativen Profilverschiebung versehen werden, um die Achsen der Räder des angesprochenen Radpaares in einem kleineren Abstand zueinander anzuordnen. Es ist aber auch drittens möglich, bei dem einen Radpaar eine positive Profilverschiebung und bei dem anderen eine negative Profilverschiebung vorzusehen.

Nach dem oben Gesagten ist klar, daß bei Verwendung des gleichen Moduls (Zahngröße) die Zahnräder mit i + 1 Zähnen einen größeren Durchmesser haben, als die mit i Zähnen. Daher kann -gemäß den oben dargestellten Möglichkeiten- bei den kleineren Zahnrädern mit i Zähnen und den zugehörigen Zahnrädern ein Zahnausgleich, beispielsweise eine positive Profilverschiebung, durchgeführt werden, damit der gewünschte Achsabstand gewährleistet ist. Auch die Verwendung eines unterschiedlichen Moduls (Zahngröße) der Zahnradpaare führt zu einer Anpassung des Achsabstandes. Auf diese Weise kann die Drehzahldifferenz zwischen dem Gehäuse 17 und der Abtriebswelle 21 des Umlaufgetriebes 13 ausgeglichen werden, so daß bei einem stehenden A-Antrieb, das heißt bei stehender Antriebswelle 23, und bei angetriebenem C-Antrieb 41 die ersten und zweiten Zahnräder 9 und 11 der konzentrischen Wellen 7 und 5 gleich schnell rotieren und die gewünschte Entkopplung gegeben ist.

Wenn man bei den in Figur 2 und 3 dargestellten Antrieben zwischen gegen- und gleichläufigen Getrieben unterscheidet, ergeben sich folgende Gleichungen:

Für den in Figur 2 dargestellten Fall, bei dem die Zähnezahl der Zahnräder 9 und 11 der konzentrischen Wellen 5 und 7 gleich und beliebig ist, so daß die Beziehung Z1 = Z3 gilt, ergibt sich aus Gleichung (1) für ein gegenläufiges Getriebe 13 die folgende Gleichung (3):

$$Z4 = \frac{z * i}{E * (i + 1) - 1} > 0 \quad (3)$$

Dabei wurde in Gleichung (1) noch von folgender Voraussetzung ausgegangen:

$$Z2 = Z4 + z,$$

wobei mit z die Zähnezahldifferenz bezeichnet wird. Der Wert von z ist größer 0, falls die Zähnezahl Z2 des dritten Zahnrads 15 größer ist als die Zähnezahl Z4 des vierten Zahnrads 19, und kleiner 0, falls die Zähnezahl Z2 kleiner ist als die Zähnezahl Z4.

Aus diesen Gleichungen läßt sich die Zähnezahl des entkoppelten Antriebs berechnen. Im folgenden soll davon ausgegangen werden, daß der Entkopplungsfaktor E den Wert 1 annimmt, daß also die im Inneren der zweiten Welle 5 angeordnete untergeordnete erste Welle 7 entkoppelt ist und sich bei stehendem eigener Antriebswelle 23 gleich schnell dreht wie die angetriebene, die untergeordnete erste Welle 7 umgebende übergeordnete hohl ausgeführte zweite Welle 5.

In Figur 2 dreht sich das vierte Zahnrad 19 im Falle der Entkopplung bei stehender Antriebswelle 23 um i + 1 Umdrehungen, während sich das Zahnrad 15 am Gehäuse 17 des Getriebes um i Umdrehungen, also langsamer, dreht.

Gemäß der oben erläuterten Herleitung werde das langsamer drehende dritte Zahnrad 15 mit einer um z größeren Zähnezahl versehen als das Zahnrad 19 auf der Abtriebswelle 21 des Umlaufgetriebes 13. Es gelten folglich die Gleichungen:

$$Z2 = Z4 + z \text{ und}$$
$$Z4 = z * i \quad (4)$$

Es wird im folgenden angenommen, daß die Zähnezahldifferenz z den Wert 1 annehme. Das ist üblicherweise dann der Fall, wenn das Umlaufgetriebe eine ausreichend große Untersetzung i aufweist, um die Zähnezahlen in etwa gleich groß wie i ausführen zu können. Für gegenläufige Getriebe und Anordnung entsprechend Figur 2 ergeben sich die folgenden Zähnezahlen:

$$Z4 = i$$
$$Z2 = Z4 + z = i + 1$$
$$Z1 = Z3 = \text{beliebig.}$$

Die hiermit ermittelten Zähnezahlen des Radpaares Z1,Z2 - welches aus dem ersten Zahnrad 9 und dem dritten Zahnrad 15 besteht- können mit einem beliebigen gemeinsamen Faktor x, die Zähnezahlen des Radpaares Z3,Z4 -welches aus dem zweiten Zahnrad 11 und dem vierten Zahnrad 19 besteht- mit einem beliebigen gemeinsamen Faktor y multipliziert werden, um die Achsabstände anzugleichen; zusätzlich hierzu können die Radpaare Z1,Z2 und Z3,Z4 mit unterschiedlichem Modul (Zahngröße) ausgeführt werden.

Bei einer Konstellation gemäß Figur 2 ergeben sich dagegen für ein gleichläufiges Getriebe die folgenden Gleichungen.

Folgende Voraussetzungen werden für eine Ableitung aus Gleichung (1) angenommen: Die Zähnezahl Z1 des Zahnrads 9 der ersten Welle 7 entspricht der Zähnezahl Z3 des auf dem Gehäuse 17 angeordneten Zahnrads 15 des Umlaufgetriebes 13. Die Zähnezahl kann beliebig gewählt werden.

Weiter wird davon ausgegangen, daß die Zähnezahl Z2 des auf dem Gehäuse 17 des Übersetzungsgetriebes 13 angeordneten Zahnrads 15 sich aus folgender Gleichung ergibt: Z2 = Z4 - z. Die Zähnezahldifferenz z ist größer 0, falls die Zähnezahl Z2 des dritten Zahnrads 15 kleiner ist als die Zähnezahl Z4 des vierten Zahnrads 19. Die Differenz z ist kleiner 0, falls die Zähnezahl Z2 größer ist als die Zähnezahl Z4.

Unter dieser Voraussetzung ergibt sich der Entkopplungsfaktor E aus folgender Gleichung:

$$E = \frac{(Z4 - z) * i}{Z4 * (i - 1)} \quad (5)$$

Durch die Auflösung nach Z4 ergibt sich für die Zähnezahl Z4 des vierten Zahnrads 19 folgende Gleichung:

$$Z4 \frac{z * i}{i - E * (i - 1)} > 0 \quad (6)$$

Für den Entkopplungsfall E = 1 dreht sich das als Stirnrad ausgelegte vierte Zahnrad 19 bei stehender Antriebswelle 23 bei einem gleichläufigen Getriebe um i - 1 Umdrehungen, sofern das dritte Zahnrad 15 beziehungsweise das Gehäuse 17 des Umlaufgetriebes 13 um i Umdrehungen gedreht wird. Zur Erreichung der Entkopplung wird das langsamer drehende vierte Zahnrad 19 mit z Zähnen mehr versehen als das dritte Zahnrad 15, so daß sich folgende Gleichung ergibt: Z2 = Z4 - z.

Nach allem ergibt sich für das vierte Zahnrad 19 die Zähnezahl Z4 aus folgender Gleichung:

$$Z4 = z * i \quad (7)$$

Für den in der Praxis mit wenig Aufwand realisierbaren Fall einer Zähnezahldifferenz von z = 1 ergeben sich für den Antrieb gemäß Figur 2 bei der Heranziehung eines gleichläufigen Getriebes und Anordnung entsprechend Figur 2 die Zähnezahlen der Zahnräder aus folgenden Gleichungen:

Z4 = i

Z2 = Z4 - z = i - 1

Z1 = Z3 = beliebig

Auch hier können die ermittelten Zähnezahlen der o.g. Radpaare Z1,Z2 und Z3,Z4 mit beliebigen Faktoren x, bzw. y multipliziert, sowie unterschiedlich großer Modul (Zahngröße) vorgesehen werden.

Bei Figur 3 wurde unterstellt, daß die Zähnezahl Z2 und Z4 der Zahnräder 15 und 19 des als gegenläufiges Getriebe ausgelegten Umlaufgetriebes 13 gleich und beliebig ist. Für das Zahnrad 11 der zweiten Welle 5 ergibt sich die Zähnezahl Z3 aus folgender Gleichung: Z3 = Z1 + z. Dabei nimmt die Zähnezahldifferenz einen Wert größer 0 an, falls die Zähnezahl Z3 des zweiten Zahnrads 11 größer ist als die Zähnezahl Z1 des ersten Zahnrads 9 der ersten Welle 7. z ist kleiner 0, falls die Zähnezahl Z3 kleiner als die Zähnezahl Z1 ist.

Aus der Gleichung für den Entkopplungsfaktor

$$E = \frac{(Z1 + z) * i}{Z1 * (i + 1)} \quad (8)$$

ergibt sich die Zähnezahl Z1 des ersten Zahnrads 9 aus folgender Gleichung:

$$Z1 = \frac{z * i}{E * (i + 1) - i} > 0 \quad (9)$$

Das Zahnrad 11 der zweiten Welle 5 wird von dem zugehörigen Zahnrad 19 an der Abtriebswelle 21 des Umlaufgetriebes 13, also von dem schnelleren der beiden gleich großen dritten und vierten Zahnräder 15 und 19 angetrieben. Die Zähnezahl Z3 des zweiten Zahnrads 11 wird also um die Zähnezahldifferenz z größer gewählt als die Zähnezahl Z1 des ersten Zahnrads 9. Mit Z3 = Z1 + z ergibt sich die Zähnezahl Z1 des Zahnrads 9 aus der folgenden Gleichung:

$$Z1 = z * i \quad (10)$$

Für eine Zähnezahldifferenz z = 1 ergeben sich die Zähnezahlen des hier beschriebenen Antriebs bei einem gegenläufigen Getriebe und Anordnung entsprechend Figur 3 folgendermaßen:

Z1 = i

Z3 = Z1 + z = i + 1

Z2 = Z4 = beliebig

Auch hier können die ermittelten Zähnezahlen der o.g. Radpaare Z1,Z2 und Z3,Z4 mit beliebigen Faktoren x, bzw. y multipliziert, sowie unterschiedlich großer Modul (Zahngröße) vorgesehen werden.

Für die Berechnung eines gleichläufigen Getriebes bei einem Antrieb gemäß Figur 3 ergibt sich dagegen aus Gleichung (1) unter der Voraussetzung, daß Z2 = Z4 = beliebig und mit Z3 = Z1 - z der Entkopplungsfaktor aus der Gleichung

$$E = \frac{(Z1 - z) * i}{Z1 * (i - 1)} \quad (11)$$

Dabei wird die Zähnezahldifferenz z einen Wert größer 0 annehmen, falls die Zähnezahl Z3 kleiner ist als die Zähnezahl Z1, und einen Wert kleiner 0, falls Z3 größer ist als Z1.

Aus Gleichung (11) ergibt sich die Zähnezahl Z1 des ersten Zahnrads 9 aus folgender Gleichung:

$$Z1 = \frac{z * i}{i - E * (i - 1)} > 0 \quad (12)$$

Für E = 1, also für den Fall der Entkopplung mit gleicher Drehzahl, wird das als Stirnrad ausgelegte Zahnrad 11 der zweiten Welle 5 von dem langsameren der beiden gleich großen Zahnräder 15 und 19 des Umlaufgetriebes 13 angetrieben. Deshalb wählt man für das zweite Zahnrad 11 eine Zähnezahl Z3, die um die Zähnezahldifferenz z kleiner ist als die Zähnezahl Z1 des ersten Zahnrads 9. Mit Z3 = Z1 - z ergibt sich also die Zähnezahl Z1 des Zahnrads 9 aus folgender Gleichung

$$Z1 = z * i \quad (13)$$

Für den Fall, daß eine Zähnezahldifferenz von z = 1 ausgeglichen werden muß, ergeben sich folgende Zähnezahlen:

Z1 = z ∗ i

Z3 = Z1 - z = i - 1

Z2 = Z4 = beliebig

Auch hier können die ermittelten Zähnezahlen der o.g. Radpaare Z1,Z2 und Z3,Z4 mit beliebigen Faktoren x, bzw. y multipliziert, sowie unterschiedlich großer Modul (Zahngröße) vorgesehen werden.

Zuletzt soll eine Ausführungsform des Antriebs dargestellt werden, bei dem ein Ausgleich der unterschiedlichen Umdrehungsgeschwindigkeiten der Zahnräder des Umlaufgetriebes durch eine geeignete Zähnezahl für die Zahnräder des Antriebs und durch eine entsprechende Auswahl des Übersetzungsverhältnisses des Getriebes erreicht wird.

Zur Vereinfachung des Antriebs sollen hierbei nur zwei Zahnrad-Typen, das heißt, zwei Zahnräder mit verschiedenen Zähnezahlen verwendet werden, wobei eine Type als erstes Zahnrad 9 und als viertes Zahnrad 19 und die andere als drittes Zahnrad 15 und als zweites Zahnrad 11 verwendet wird, wobei die Anzahl verschiedener Teile verringert wird.

Abweichend zu obigen Ermittlungen der Zähnezahlen ist die Zähnezahlsumme der beiden Radpaare gleich groß, so daß kein Zahnausgleich erforderlich ist.

Für gegenläufige Umlaufgetriebe ergibt sich aus Gleichung (1) dann folgendes Gleichungssystem

$$\frac{E * Z4 * (i + 1)}{Z3} = \frac{Z2 * i}{Z1}$$

Setzt man nun, wie oben angenommen, Z1 = Z4 und Z2 = Z3 ergibt sich die folgende Gleichung:

Z1² / Z2² = i / (E ∗ (i + 1)).

Nach Auflösung dieser Gleichung ergeben sich die folgenden Zähnezahlen:

Z1 = Z2 ∗ (i / (E ∗ (i + 1)) )$^{0,5}$

Diese Gleichung wird als Gleichung (14) bezeichnet, wobei zusätzlich gilt: Z4 = Z1 und Z3 = Z2.

Für gleichläufige Umlaufgetriebe ergibt sich aus Gleichung (2) folgendes Gleichungssystem:

$$\frac{E * Z4 * (i - 1)}{Z3} = \frac{Z2 * i}{Z1}$$

Mit Z1 = Z4 und Z2 = Z3 ergibt sich folgendes:

Z1² / Z2² = i / (E ∗ (i - 1)).

Durch Auflösung ergibt sich die Gleichung (15):

Z1 = Z2 ∗ (i / (E ∗ (i - 1)) )$^{0,5}$

Durch die Quadratwurzel in den Gleichungen (14) und (15) ergeben sich in der Regel nicht ganzzahlige Zähnezahlen. Die Übersetzung i des für diesen Antrieb eingesetzten Getriebes, der bei Cyclo- oder Harmonic-Drive-Getrieben ganzzahlig ist, muß in diesen Gleichungen so angepaßt werden, daß sich für die Zähnezahlen ganzzahlige Werte ergeben. Dies wird beispielsweise durch den Einsatz von Planetengetrieben erreicht, deren Übersetzungsverhältnis i nicht ganzzahlig zu sein braucht.

Das hier jeweils anhand von zwei konzentrischen Wellen erläuterte Entkopplungsprinzip läßt sich auf beliebig viele Wellen übertragen.

Anhand von Figur 4 wird ein Ausführungsbeispiel mit vier konzentrischen Wellen beschrieben. Das untere Ende des zugehörigen Roboter-Greifarms ist aus Gründen der besseren Übersichtlichkeit hier nicht wiedergegeben.

Die äußerste Hohlwelle 5, die auch als Basis oder übergeordnete Welle bezeichnet wird, trägt an ihrem oberen Ende ein erstes Zahnrad 11. Dieses kämmt mit einem Zahnrad 19-1 auf der Abtriebswelle 21-1 eines ersten Umlaufgetriebes 13-1. Bei dem hier dargestellten Ausführungsbeispiel greift der Antrieb für die Hohlwelle 5, der C-Antrieb, nicht unmittelbar an dem Zahnrad 19-1 an, wie dies in den Figuren 1 bis 3 dargestellt ist; vielmehr ist ein eigenes Antriebszahnrad ZC vorgesehen, an dem ein geeigneter Antrieb, der hier nicht dargestellt ist, angreift.

Am oberen Ende der konzentrisch zur Hohlwelle 5 angeordneten Hohlwelle 7 ist ein Zahnrad 9 angebracht, das mit einem am Gehäuse 17-1 des Umlaufgetriebes 13-1 angeordneten Zahnrad 15-1 kämmt.

Der Antrieb der Hohlwelle 7 erfolgt über die Antriebswelle 23-1 des ersten Umlaufgetriebes 13-1.

Während das erste Umlaufgetriebe 13-1 das Zahnrad 9 der Hohlwelle 7 vom Zahnrad 11 der Hohlwelle 5 entkoppelt, ist ein zweites Umlaufgetriebe 13-2 vorgesehen, welches das Zahnrad 51 der Hohlwelle 53, die im Inneren der Hohlwelle 7 verläuft, vom Zahnrad 9 der Hohlwelle 7 entkoppelt. Dabei kämmt das Zahnrad 9 mit einem auf der Abtriebswelle 21-2 des zweiten Umlaufgetriebes 13-2 angeordneten Zahnrad 19-2, während das Zahnrad 51 mit einem am Gehäuse 17-2 befestigten Zahnrad 15-2 des zweiten Umlaufgetriebes 13-2 kämmt. Der Antrieb der Hohlwelle 53 erfolgt über die Antriebswelle 23-2 des zweiten Umlaufgetriebes.

Schließlich ist noch ein drittes Umlaufgetriebe 13-3 vorgesehen, welches das Zahnrad 55 der Hohlwelle 57, die innerhalb der Hohlwelle 53 verläuft, vom Zahnrad 51 der Hohlwelle 53 entkoppelt. Es wird also auch hier die innere von der äußeren Hohlwelle entkoppelt.

Ein auf der Abtriebswelle 21-3 des dritten Umlaufgetriebes 13-3 liegendes Zahnrad 19-3 kämmt mit dem Zahnrad 51 der Hohlwelle 53. Ein mit dem Gehäuse 17-3 des Umlaufgetriebes 13-3 umlaufendes Zahnrad 15-3 kämmt mit dem Zahnrad 55 der innersten Welle 57. Der Antrieb der Welle 57 erfolgt über die Antriebswelle 23-3 des dritten Umlaufgetriebes 13-3.

In Figur 4 ist folgendes Grundprinzip erkennbar: Jeweils die Hohlwelle, welche die Bewegung der von einem Umlaufgetriebe angetriebenen Roboter-Achse ohne Entkopplung beeinflussen würde, versetzt dieses Umlaufgetriebe in Drehung. Durch Abstimmung der Zähnezahlen auf den Entkopplungsfaktor und die herrschende Drehzahldifferenz zwischen Gehäuse und Abtriebswelle, welche sich wiederum aus Untersetzung und Bauart des Umlaufgetriebes ergibt, wird eine Kompensation der Bewegungsbeeinflussung erreicht. Es fällt auf, daß keinerlei weitere Maßnahmen und Bauteile zur Synchronisation der Wellen notwendig sind um eine Entkopplung zu erreichen. In Figur 1 erhöht sich die Anzahl der Bauteile im Vergleich zu einer unentkoppelten Lösung lediglich aufgrund der zur Entkopplung notwendigen Lagerung des Umlaufgetriebes. Zahnrad 19 übernimmt bei Verwendung der Entkopplung eine Doppelfunktion, indem es sowohl dem Antrieb der Hohlwelle 5 als auch dem Antrieb des Umlaufgetriebes 13 dient. In Figur 4 wird lediglich je ein weiteres Zahnrad zum Antreiben der Umlaufgetriebe 13-2 und 13-3 notwendig. Die Zahnräder 11, 9 und 51 übernehmen eine Doppelfunktion zum Antreiben einer Hohlwelle und eines Umlaufgetriebes.

Dieses Grundprinzip der Entkopplung gilt für alle Umlaufgetriebe, also für alle drei Umlaufgetriebe gemäß Figur 4 entsprechend. Wenn also bei feststehender Antriebswelle aller Umlaufgetriebe 13-1, 13-2 und 13-3 der Antrieb des Zahnrads ZC bewegt wird, drehen sich Hohlwellen 5, 7, 53 und 57 entsprechend den vorgegebenen Entkopplungsfaktoren zwischen den zu entkoppelnden Zahnrädern 9, 11; 51,9; 55,51 und deren Hohlwellen, beziehungsweise für den Sonderfall, daß alle Entkopplungsfaktoren gleich 1 sind, mit gleicher Umdrehungsgeschwindigkeit. Es ist nun möglich, während einer Umdrehung der Basiswelle 5 gezielt die Antriebe der einzelnen Untersetzungsgetriebe zu betätigen. Es kann also außer der angesprochenen Entkopplung zusätzlich eine gezielte Bewegung einer entkoppelten Welle vorgenommen werden.

Für den Sonderfall, daß die Zahnräder 11, 9, 51 und 55 denselben Modul (Zahngröße) und dieselbe Profilverschiebung aufweisen, sowie alle Entkopplungsfaktoren E = 1 sind, ist die Einbaulage der Umlaufgetriebe frei wählbar; sind beispielsweise die Zahngeometrien der Zahnräder 9 und 11 identisch, ist es irrelevant, ob Zahnrad 15-1 mit 9 und 19-1 mit 11 oder aber Zahnrad 15-1 mit 11 und 19-1 mit 9 zusammenwirkt.

Überträgt man diesen Grundgedanken noch einmal auf Figur 1, so ergibt sich folgendes: Man kann also die dort als Basiswelle dienende Hohlwelle 5 einer Rotation unterwerfen, indem ein Drehmoment an die Antriebswelle 41, den C-Antrieb, gelegt wird. Bei feststehendem A-Antrieb, also bei festgehaltener Antriebswelle 23, drehen sich die beiden Wellen 5 und 7 bei einem Entkopplungsfaktor E = 1 mit gleicher Umdrehungsgeschwindigkeit. Das heißt, bei einer Rotation der Hohlwelle 5 um die C-Achse 31 steht die Hohlwelle 33 still. Es findet also keine Rotation um die A-Achse 37 statt. Es kann jedoch durch ein gezieltes Drehmoment am A-Antrieb 23 eine zusätzliche gezielte Rotation der Hohlwelle 33 um die A-Achse erfolgen, ohne daß dadurch eine Beeinträchtigung der Rotation um die C-Achse gegeben ist.

Dieses Grundprinzip läßt sich, wie gesagt, auf alle vier Achsen gemäß Figur 4 übertragen.

Figur 5 zeigt ein weiteres Ausführungsbeispiel eines Robotergreifarms, der dem in Figur 1 gezeigten sehr ähnlich ist. Gleiche Bezugszeichen werden daher für in beiden Figuren übereinstimmende Teile verwendet. Auf deren Beschreibung wird hier verzichtet; insoweit wird auf die Erläuterungen zu Figur 1 verwiesen.

Der Roboter-Greifarm gemäß Figur 5 zeichnet sich durch eine zusätzliche im Inneren der beiden Hohlwellen 5 und 7 verlaufende Welle 53 aus, die an ihrem oberen Ende mit einem Zahnrad 51 versehen ist. Zwischen dem Zahnrad 9 der die Welle 53 umschließenden Hohlwelle 7 und dem Zahnrad 51 der hier als Hohlwelle ausgebildeten Welle 53 ist ein zweites Umlaufgetriebe 13-2 vorgesehen. An dessen Gehäuse 17-2 ist ein Zahnrad 15-2 drehfest angeordnet, das mit dem Zahnrad 9 kämmt. Die Abtriebswelle 21-2 des zweiten Getriebes trägt ein fest verbundenes Zahnrad 19-2, das mit dem Zahnrad 51 kämmt. Die Antriebswelle 23-2 des zweiten Übersetzungsgetriebes 13-2 ragt aus dem Gehäuse 17-2 und zwar auf der der Abtriebswelle 21-2 gegenüberliegenden Seite. Aus der Darstellung gemäß Figur 5 ist ersichtlich, daß das zweite Untersetzungsgetriebe 13-2 gegenüber dem ersten Getriebe 13 seitenverkehrt angeordnet ist, das heißt, daß die Abtriebswelle 21-2 hier oberhalb des Gehäuses 17-2 angeordnet ist.

In dem unteren Gehäuse 25 ist ein erstes Kegelradgetriebe mit Kegelzahnrädern 27 und 29 untergebracht, das mit der Hohlwelle 7 und der konzentrisch zur A-Achse 37 liegenden Hohlwelle 33 zusammenwirkt. Bei einer Drehung der Hohlwelle 7 um die C-Achse 31 wird die Hohlwelle 33 um die A-Achse 37 gedreht.

In dem unteren Gehäuse 25 ist noch ein weiteres Kegelradgetriebe vorgesehen, das ein erstes Kegelrad 127 aufweist, welches der Welle 53 zugeordnet ist. Ein zweites Kegelrad 129 ist einer konzentrisch zur Hohlwelle 33 angeordneten Welle 133 zugeordnet. An dem dem Kegelrad 129 gegenüberliegenden Ende der Welle 133 ist eine Greiferanordnung 135 vorgesehen, die durch eine Drehung der Welle 133 geöffnet und geschlossen wird. Diese Drehung verursacht beispielsweise eine axiale Verschiebung eines relativ zur Welle 33 rotationsfest gehalten Innengewindestücks 139 auf dem Außengewinde 137 der Welle 133. Diese Verschiebung des Innengewindestückes 139 führt je nach Drehrichtung der Welle 133 zum öffnen bzw. Schließen der Greifarme 141, welche an einem Flansch 35 der Hohlwelle 33 um einen Schwenkzapfen 143 schwenkbar gelagert sind und gleichzeitig in zwei Längsnuten des Innengewindestücks 139 eingreifen.

Es wird hier davon ausgegangen, daß das Übersetzungsverhältnis der Kegelräder 127 und 129 zum Antrieb des Greifers 135 den Wert 1 habe. Das heißt, wenn das Kegelrad 127 zwei Umdrehungen ausführt, dreht sich die Welle 133 ebenfalls zweimal. Soll die sich um die A-Achse drehende Welle 33 eine Umdrehung ausführen, so muß sich die Welle 133 ebenfalls um eine Umdrehung drehen, falls der Greifer 135 während der Drehung der Welle 33 seine Stellung nicht verändern soll. Für die hier dargestellte Ausführungsform wird davon ausgegangen, daß das Übersetzungsverhältnis der Kegelräder 27 und 29 für den Antrieb der Hohlwelle 33 i = 2 beträgt. Das heißt also, die Welle 33 dreht sich halb so schnell wie das Kegelrad 27. Aufgrund des Übersetzungsverhältnisses des Kegelradpaares 27, 29 muß sich die Hohlwelle 7 zweimal drehen, damit die Welle 33 eine Umdrehung ausführt. Dagegen muß sich für eine Umdrehung der Welle 133 die Hohlwelle 53 nur einmal drehen, also nur halb schnell wie die Hohlwelle 7.

Wendet man die Definitionen des Entkopplungsfaktors und der Zahnräderbenennung auf die Hohlwelle 7 und die in dieser koaxial verlaufenden Welle 53 an, so ergibt sich in Figur 5 wegen der unterschiedlichen Übersetzungsverhältnisse der Kegelradpaare 27,29 und 127,129 der Entkopplungsfaktor E zwischen dem Zahnrad 9 der Hohlwelle 7 und dem Zahnrad 51 der Hohlwelle 53 zu E = 2.

Für die Ermittlung der Zähnezahlen können die anhand der Figuren 1 bis 4 festgelegten Grundsätze für gleich- und gegenläufige Umlaufgetriebe herangezogen werden, wobei als Entkopplungsfaktor E = 2, die Zähnezahl von 19-2 als Z4, von 15-2 als Z2, von 51 als Z3 und von 9 als Z1 einzusetzen ist. Auf diese Weise lassen sich unter Berücksichtigung der zu den Figuren 1 bis 4 dargestellten Grundsätze die notwendigen Zähnezahlen zur Entkopplung der Wellen 7 und 53 ermitteln.

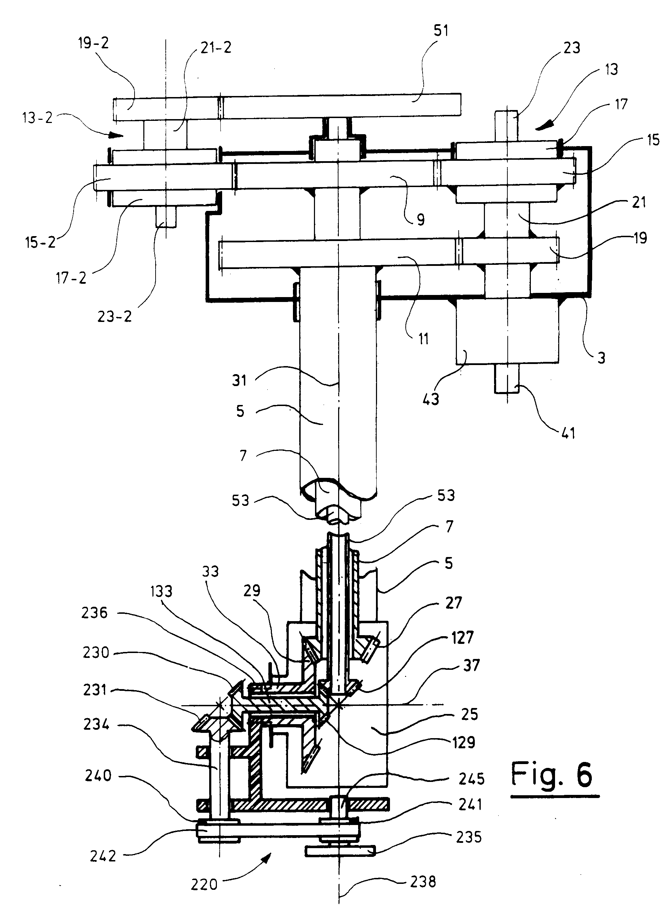

Figur 6 zeigt ein weiteres Ausführungsbeispiel eines Greifarmes ähnlich Figur 1 mit zusätzlicher B-Achsen-Anordnung 220, deren Achse 238 senkrecht auf der A-Achse 37 angeordnet ist und um diese verschwenkt werden kann. Der Flansch 235 ist die Roboter-Abtriebseinrichtung, an der eine Vorrichtung wie z.B. ein Greifer befestigt werden kann. Dieser ist hier nicht näher dargestellt.

Da der Aufbau des Getriebekastens 3 und des unteren Gehäuses 25 in Figur 6 identisch mit dem in Figur 5 gezeigten ist, werden daher gleiche Bezugszeichen für in beiden Figuren übereinstimmende Teile verwendet. Auf deren Beschreibung wird hier verzichtet; insoweit wird auf die Erläuterungen zu Figur 5 verwiesen.

In Figur 6 ist im Vergleich zu Figur 5 an der Hohlwelle 33 anstelle einer Greiferanordnung eine B-Achsen-Anordnung 220 befestigt; ferner dient in Figur 6 die Welle 133 nunmehr dem Antreiben des Flansches 235 auf dem B-Achsen-Gehäuse 236. Die Drehbewegung von Welle 133 wird hierzu in Figur 6 über das Kegelzahnradpaar 230,231 auf eine weitere Welle 234 übertragen, die im B-Achsen-Gehäuse 236 gelagert ist und an deren Ende eine Zahnriemenscheibe 240 befestigt ist. Diese versetzt über den Zahnriemen 242 und die Zahnriemenscheibe 241 die Welle 245 in Drehung, die ebenfalls im B-Achsen-Gehäuse 236 gelagert ist. An der Welle 245 ist der Flansch 235 befestigt, welcher um die B-Achse 238 drehbar gelagert ist und der Anbringung beispielsweise eines Greifers dient.

Da der Aufbau innerhalb des unteren Gehäuses 25 identisch mit Figur 5 ist, wird auf die Figur 5 betreffenden Erläuterungen bezüglich Funktion, Entkopplungsfaktor und Zähnezahlwahl verwiesen.

Aus den Erläuterungen zu Figur 5 und 6 wird klar, daß bei beispielsweise vier ineinander liegenden Hohlwellen, wie dies anhand von Figur 4 erläutert ist, die entsprechenden Übersetzungsverhältnisse von den Wellen zugeordneten Getrieben im unteren Gehäuse berücksichtigt werden können.

11

Insgesamt zeigt sich, daß die Kinematik des von einem Entkopplungsgetriebe angetriebenen Aufbaus durch den Entkopplungsfaktor berücksichtigt werden kann, wobei die Zähnezahl der Zahnräder des Antriebs, also der Zahnräder der Wellen und der zugehörigen Umlaufgetriebe anhand der vorgegebenen Gleichungen an verschiedene Entkopplungsfaktoren angepaßt werden kann.

## Patentansprüche

1. Antrieb mindestens zweier konzentrischer Wellen zum Bewegen einer Roboter-Abtriebseinrichtung insbesondere eines Roboter-Greifarmes, **dadurch gekennzeichnet,**
daß mindestens ein umlaufendes Untersetzungsgetriebe (13) vorgesehen ist, dessen Gehäuse (17) mit einem dritten Zahnrad (15) und dessen Abtriebswelle (21) mit einem vierten Zahnrad (19) versehen sind, welche der Bewegung des ersten Zahnrades (9) und der daran befestigten ersten Welle (7), sowie des zweiten Zahnrades (11) und der daran befestigten zweiten Welle (5) dienen,
daß die am Gehäuse (17) und Abtriebswelle (21) des Umlaufgetriebes (13) befestigten Zahnräder (15,19) zum Ausgleich ihrer bei feststehender Antriebswelle (23) gegebenen unterschiedlichen Umdrehungsgeschwindigkeiten eine Zähnezahldifferenz (z) aufweisen,
daß hierbei die konzentrischen Wellen (5,7) ein zueinander definiertes Drehzahlverhältnis aufweisen, und
daß die Achsabstände der miteinander im Eingriff befindlichen Zahnradpaare (15,9) und (19,11) gleichgroß sind.

2. Antrieb mindestens zweier konzentrischer Wellen zum Bewegen einer Roboter-Abtriebseinrichtung insbesondere eines Roboter-Greifarmes, **dadurch gekennzeichnet,**
daß mindestens ein umlaufendes Untersetzungsgetriebe (13) vorgesehen ist, dessen Gehäuse (17) mit einem dritten Zahnrad (15) und dessen Abtriebswelle (21) mit einem vierten Zahnrad (19) versehen sind, welche der Bewegung des ersten Zahnrades (9) und der daran befestigten ersten Welle (7), sowie des zweiten Zahnrades (11) und der daran befestigten zweiten Welle (5) dienen,
daß die an den konzentrischen Wellen (7,5) befestigten Zahnräder (9,11) zum Ausgleich der bei feststehender Antriebswelle (23) gegebenen unterschiedlichen Umdrehungsgeschwindigkeiten des Gehäuses (17) und der Abtriebswelle (21) eine Zähnezahldifferenz (z) aufweisen,
daß hierbei die konzentrischen Wellen (5,7) ein zueinander definiertes Drehzahlverhältnis aufweisen, und
daß die Achsabstände der miteinander im Eingriff befindlichen Zahnradpaare (15,9) und (19,11) gleichgroß sind.

3. Antrieb nach Anspruch 1 oder 2, **dadurch gekennzeichnet,** daß das Umlaufgetriebe (13) nicht konzentrisch mit den konzentrischen Wellen (5,7) ist.

4. Antrieb nach Anspruch 1 oder 2, **dadurch gekennzeichnet,** daß zum Erhalt von gleichgroßen Achsabständen der miteinander im Eigriff befindlichen zwei Zahnradpaare (9,15) und (11,19) an mindestens einem der vier Zahnräder (9,15,11,19) Profilverschiebung vorgenommen wird.

5. Antrieb nach Anspruch 1 oder 2, **dadurch gekennzeichnet,** daß zum Erhalt von gleichgroßen Achsabständen die miteinander im Eingriff befindlichen zwei Zahnradpaare (9,15) und (11,19) unterschiedlich großen Modul aufweisen,

6. Antrieb nach Anspruch 5, **dadurch gekennzeichnet,** daß zum Erhalt von gleichgroßen Achsabständen der miteinander im Eigriff befindlichen zwei Zahnradpaare (9,15) und (11,19) zusätzlich an mindestens einem der vier Zahnräder (9,15,11,19) Profilverschiebung vorgenommen wird.

7. Antrieb nach Anspruch 1 oder 2, **dadurch gekennzeichnet,** daß die Bewegungsübertragung zwischen den aus erstem und drittem, sowie zweitem und viertem Zahnrad gebildeten Zahnradpaaren (9,15) und (11,19) mittels Ketten oder Zahnriemen erfolgt.

8. Antrieb nach einem der Ansprüche 1 bis 7, **dadurch gekennzeichnet,** daß die an den konzentrischen Wellen (5,7) befestigten Zahnräder (11,9) gleiche Zähnezahl aufweisen.

9. Antrieb nach einem der Ansprüche 1 bis 7, **dadurch gekennzeichnet,** daß an Gehäuse (17) und Abtriebswelle (21) des Umlaufgetriebes (13) befestigten Zahnräder (15,19) gleiche Zähnezahl aufweisen.

**10.** Antrieb nach einem der Ansprüche 1 bis 7, **dadurch gekennzeichnet,** daß die an den konzentrischen Wellen (5,7) befetigten Zahnräder (11,9) sowie eines der beiden am Gehäuse (17) und Abtriebswelle (21) des Umlaufgetriebes (13) befestigten Zahnräder (15,19) gleiche Zähnezahl aufweisen.

**11.** Antrieb nach einem der Ansprüche 1 bis 7, **dadurch gekennzeichnet,** daß die am Gehäuse (17) und Abtriebswelle (21) des Umlaufgetriebes (13) befestigten Zahnräder (15,19) sowie eines der beiden an den konzentrischen Wellen (5,7) befestigten Zahnräder (11,9) gleiche Zähnezahl aufweisen.

**12.** Antrieb nach einem der Ansprüche 1 bis 7, **dadurch gekennzeichnet,** daß das erste und vierte Zahnrad (9,19) gleiche Zähnezahl aufweisen, und daß das zweite und dritte Zahnrad (11,15) eine gleichgroße, aber von den beiden anderen Zahnrädern (9,19) abweichende Zähnezahl aufweisen.

## Claims

**1.** Drive of at least two concentric shafts for moving a robot output arrangement, in particular a robot gripping arm, characterized in that there is provided at least one epicyclic reduction gear (13) whereof the housing (17) is provided with a third toothed wheel (15) and whereof the output shaft (21) is provided with a fourth toothed wheel (19) which serve to move the first toothed wheel (9) and the first shaft (7) secured thereto, as well as the second toothed wheel (11) and the second shaft (5) secured thereto, in that the toothed wheels (15, 19) secured to the housing (17) and output shaft (21) of the epicyclic gear (13) have a tooth number difference (z) to compensate for their different speeds of rotation when the drive shaft (23) is stationary, in that here the concentric shafts (5, 7) have a mutually defined speed ratio, and in that the spacings between the axes of the mutually engaging toothed wheel pairs (15, 9) and (19, 11) are of equal size.

**2.** Drive of at least two concentric shafts for moving a robot output arrangement, in particular a robot gripping arm, characterized in that there is provided at least one epicyclic reduction gear (13) whereof the housing (17) is provided with a third toothed wheel (15) and whereof the output shaft (21) is provided with a fourth toothed wheel (19) which serve to move the first toothed wheel (9) and the first shaft (7) secured thereto, as well as the second toothed wheel (11) and the second shaft (5) secured thereto, in that the toothed wheels (9, 11) secured to the concentric shafts (7, 5) have a tooth number difference (z) to compensate for the different speeds of rotation of the housing (17) and of the output shaft (21) when the drive shaft (23) is -stationary, in that here the concentric shafts (5, 7) have a mutually defined speed ratio, and in that the spacings between the axes of the mutually engaging toothed wheel pairs (15, 9) and (19, 11) are of equal size.

**3.** Drive according to Claim 1 or 2, characterized in that the epicyclic gear (13) is not concentric with the concentric shafts (5, 7).

**4.** Drive according to Claim 1 or 2, characterized in that in order to obtain equal spacings between the axes of the mutually engaging two toothed wheel pairs (9, 15) and (11, 19) a profile offset is carried out on at least one of the four toothed wheels (9, 15, 11, 19).

**5.** Drive according to Claim 1 or 2, characterized in that in order to obtain equal spacings between axes the mutually engaging two toothed wheel pairs (9, 15) and (11, 19) have a different module.

**6.** Drive according to Claim 5, characterized in that in order to obtain equal spacings between the axes of the mutually engaging two toothed wheel pairs (9, 15) and (11, 19) in addition a profile offset is carried out on at least one of the four toothed wheels (9, 15, 11, 19).

**7.** Drive according to Claim 1 or 2, characterized in that the transmission of motion between the toothed wheel pairs (9, 15) and (11, 19) formed from first and third toothed wheels, as well as second and fourth toothed wheels is effected by means or chains or toothed belts.

**8.** Drive according to one of Claims 1 to 7, characterized in that the toothed wheels (11, 9) secured to the concentric shafts (5, 7) have an equal tooth number.

**9.** Drive according to one of Claims 1 to 7, characterized in that toothed wheels (15, 19) secured to housing (17) and output shaft (21) of the epicyclic gear (13) have an equal tooth number.

**10.** Drive according to one of Claims 1 to 7, characterized in that the toothed wheels (11, 9) secured to the concentric shafts (5, 7), and one of the two toothed wheels (15, 19) secured to the housing (17) and output shaft (21) of the epicyclic gear (13) have the same tooth number.

**11.** Drive according to one of Claims 1 to 7, characterized in that the toothed wheels (15, 19) secured to the housing (17) and output shaft (21) of the epicyclic gear (13), and one of the two toothed wheels (11, 9) secured to the concentric shafts (5, 7) have the same tooth number.

**12.** Drive according to one of Claims 1 to 7, characterized in that the first and fourth toothed wheels (9, 19) have the same tooth number, and in that the second and third toothed wheels (11, 15) have a tooth number which is equal but which is different from the other two toothed wheels (9, 19).

**Revendications**

**1.** Entraînement d'au moins deux arbres concentriques pour déplacer un dispositif de sortie de robot notamment un bras de prise de robot, caractérisé en ce qu'on prévoit au moins un réducteur (13) planétaire dont le carter (17) est muni d'un troisième pignon (15) et dont l'arbre de sortie (21) est muni d'un quatrième pignon (19), qui sert à actionner le premier pignon (9) et le premier arbre (7) qui y est fixé, ainsi que le deuxième pignon (11) et le deuxième arbre (5) qui y est fixé ;
en ce que les pignons (15, 19) fixés sur le carter (17) et sur l'arbre de sortie (21) de l'engrenage planétaire (13), présentent une différence de nombres de dents (z) pour compenser leur différence de vitesses de rotation donnée quand l'arbre d'entraînement (23) est immobile ; et
en ce que les arbres concentriques (5, 7) présentent l'un par rapport à l'autre un rapport de vitesses de rotation défini, et les entre-axes des paires de pignons (15, 9) et (19, 11) en prise sont identiques.

**2.** Entraînement d'au moins deux arbres concentriques pour déplacer un dispositif de sortie de robot, notamment un bras de prise de robot, caractérisé en ce qu'on prévoit au moins un réducteur (13) planétaire dont le carter (17) est muni d'un troisième pignon (15) et dont l'arbre de sortie (21) est muni d'un quatrième pignon (19), qui sert à actionner le premier pignon (9) et le premier arbre (7) qui y est fixé, ainsi que le deuxième pignon (11) et le deuxième arbre (5) qui y est fixé ;
en ce que les pignons (9, 11) fixés aux arbres concentriques (7, 5) présentent une différence de nombres de dents (z) pour compenser la différence de vitesses de rotation donnée du carter (17) et de l'arbre de sortie (21) quand l'arbre d'entraînement (23) est immobile ;
en ce qu'ainsi les arbres concentriques (5, 7) présentent l'un par rapport à l'autre un rapport de vitesse de rotation défini ; et
en ce que les entre-axes des paires de pignons ,en prise (15, 9) et (19, 11) sont identiques.

**3.** Entraînement selon la revendication 1 ou 2, caractérisé en ce que le réducteur planétaire (13) n'est pas concentrique aux arbres concentriques (5, 7).

**4.** Entraînement selon la revendication 1 ou 2, caractérisé en ce que pour obtenir des entre-axes équivalents des deux paires de pignons (9, 15) et (11, 19) se trouvant en prise, on réalise un décalage de profil sur au moins l'un des quatre pignons (9, 15 ; 11, 19).

**5.** Entraînement selon la revendication 1 ou 2, caractérisé en ce que pour obtenir des entre-axes équivalents, les deux paires de pignons se trouvant en prise (9, 5) et (11, 19) présentent des modules d'importances différentes.

**6.** Entraînement selon la revendication 5, caractérisé en ce que pour obtenir des entre-axes équivalents des deux paires de pignons (9, 15) et (11, 19) se trouvant en prise, on réalise en plus un décalage de profil sur au moins l'un des quatre pignons (9, 15 ; 11, 19).

**7.** Entraînement selon la revendication 1 ou 2), caractérisé en ce que la transmission de mouvement entre les paires de pignons (9, 15) et (11, 19) constituées premier et du troisième pignon, ainsi que du deuxième et du quatrième pignon, est réalisée au moyen de chaînes ou de courroies crantées.

**8.** Entraînement selon l'une des revendications 1 à 7, caractérisé en ce que les pignons fixés sur les arbres concentriques (5, 7) présentent le même nombre de dents.

**14**

9. Entraînement selon l'une des revendications 1 à 7, caractérisé en ce que les pignons (15, 19) fixés sur le carter (17) et l'arbre de sortie (21) du réducteur planétaire (13) présentent le même nombre de dents.

10. Entraînement selon l'une des revendications 1 à 7, caractérisé en ce que les pignons (11, 9) fixés sur les arbres concentriques (5, 7) ainsi que l'un des deux pignons fixés sur le carter (17) et l'arbre de sortie (21) du réducteur planétaire (13), présentent le même nombre de dents.

11. Entraînement selon l'une des revendications 1 à 7, caractérisé en ce que les pignons (15, 19) fixés sur le carter (17) et l'arbre de sortie (21) du réducteur planétaire (13), ainsi que l'un des deux pignons (11, 9) fixés sur les arbres concentriques (5, 7), présentent le même nombre de dents.

12. Entraînement selon l'une des revendications 1 à 7, caractérisé en ce que le premier et le quatrième pignon (9, 19) présentent le même nombre de dents, tandis que le deuxième et le troisième pignon (11, 15) présentent un nombre de dents identique mais différent de celui des deux autres pignons (9, 19).

Fig. 1

Fig. 2

Fig. 3

Fig. 4

Fig. 5

Fig. 6